# EUROPÄISCHE PATENTSCHRIFT

(11) **EP 2 795 934 B1**
(45) Veröffentlichungstag und Bekanntmachung des Hinweises auf die Patenterteilung: **13.03.2019**
(21) Anmeldenummer: 12813280.0
(22) Anmeldetag: 19.12.2012
(51) Int. Cl.: H04W 4/00

(54) **VERFAHREN ZUR KOMMUNIKATION MIT EINER APPLIKATION AUF EINEM PORTABLEN DATENTRÄGER SOWIE EIN SOLCHER PORTABLER DATENTRÄGER**
METHOD FOR COMMUNICATING WITH AN APPLICATION ON A PORTABLE DATA STORAGE MEDIUM, AND SUCH A PORTABLE DATA STORAGE MEDIUM
PROCÉDÉ DE COMMUNICATION AVEC UNE APPLICATION SUR UN SUPPORT DE DONNÉES PORTABLE AINSI QUE SUPPORT DE DONNÉES PORTABLE DE CE TYPE

(30) Priorität: 23.12.2011 DE 102011122242
(43) Veröffentlichungstag der Anmeldung: 29.10.2014
(73) Patentinhaber: Giesecke+Devrient Mobile Security GmbH, 81677 München (DE)
(72) Erfinder: SCHNELLINGER, Michael, 84032 Landshut (DE); GOSCHENHOFER, Frank, 86161 Augsburg (DE)
(86) Internationale Anmeldenummer: PCT/EP2012/005280
(87) Internationale Veröffentlichungsnummer: WO 2013/091863

(56) Entgegenhaltungen:
- US-A1- 2004 154 027
- US-A1- 2006 266 843
- Uwe Hansmann, Martin Nicklous: "Smart Card Application Development Using Java", , 1. Januar 2002 (2002-01-01), XP002697875, Gefunden im Internet: URL:http://books.google.de/books?id=YGp3vR BOVxMC&pg=PA243&lpg=PA243&dq=java+card+ser ver+proxy&source=bl&ots=3LH5x_JqNi&sig=2z2 F5D-sG4uWQpkrvFfOKY8JCIY&hl=en&sa=X&ei=Vau kUa7IH4WR7Ab5lIC4Bw&ved=0CEsQ6AEwBA#v=onep age&q=java%20card%20server%20proxy&f=false [gefunden am 2013-05-28]
- C. Enrique Ortiz: "An Introduction to Java Card Technology - Part 3, The Smart Card Host Application", , 1. September 2003 (2003-09-01), XP002697876, Gefunden im Internet: URL:http://www.oracle.com/technetwork/java /javacard/javacard3-138837.html [gefunden am 2013-05-28]

## Beschreibung

Die Erfindung betrifft ein Verfahren zur Kommunikation mit einer Applikation auf einem portablen Datenträger sowie einen solchen portablen Datenträger.

Portable Datenträger, insbesondere in der Form von Chipkarten bzw. Smartcards, werden heutzutage bei einer Vielzahl von Anwendungen verwendet, wie z.B. in Mobiltelefonen als SIM- bzw. USIM-Karten, als Bankkarten, als Gesundheitskarten und dergleichen. Derartige portable Datenträger umfassen zur Ausführung von entsprechenden Applikationen einen Mikroprozessor und eine Mehrzahl von flüchtigen bzw. nicht-flüchtigen Speicherbereichen. Als nicht-flüchtiger Speicherbereich kann z.B. ein ROM bzw. ein EEPROM bzw. ein Flash-Speicher vorgesehen sein. Der flüchtige Speicher ist beispielsweise als RAM realisiert. Im Gegensatz zu dem nicht-flüchtigen Speicherbereich gehen Daten aus dem flüchtigen Speicherbereich verloren, wenn die Ausführung eines Prozesses auf dem Datenträger beendet ist (Card Reset) bzw. die zur Ausführung von Prozessen benötigte Stromversorgung getrennt wird.

Für die Erstellung plattformunabhängiger Applikationen für einen portablen Datenträger eignen sich insbesondere objektorientierte Programmiersprachen. Dabei hat sich die Java Card™-Technologie etabliert. Diese Technologie wird in der Java Card Spezifikation beschrieben, die laufend aktualisiert wird und in der Version 3.0 vorliegt (siehe http://java.sun.com/javacard/3.0/specs.jsp). In der Java Card Spezifikation werden die Java Card Virtual Machine (JCVM) und die Java Card API (API = Application Programming Interface) definiert, die zusammen die Java Card Laufzeitumgebung (auch als JCRE [Java Card Runtime Environment] bezeichnet) ausbilden. Im Rahmen der vorliegenden Erfindung wird eine portable Chipkarte, die basierend auf der Java Card Spezifikation arbeitet, als Java Card bzw. Javakarte bezeichnet.

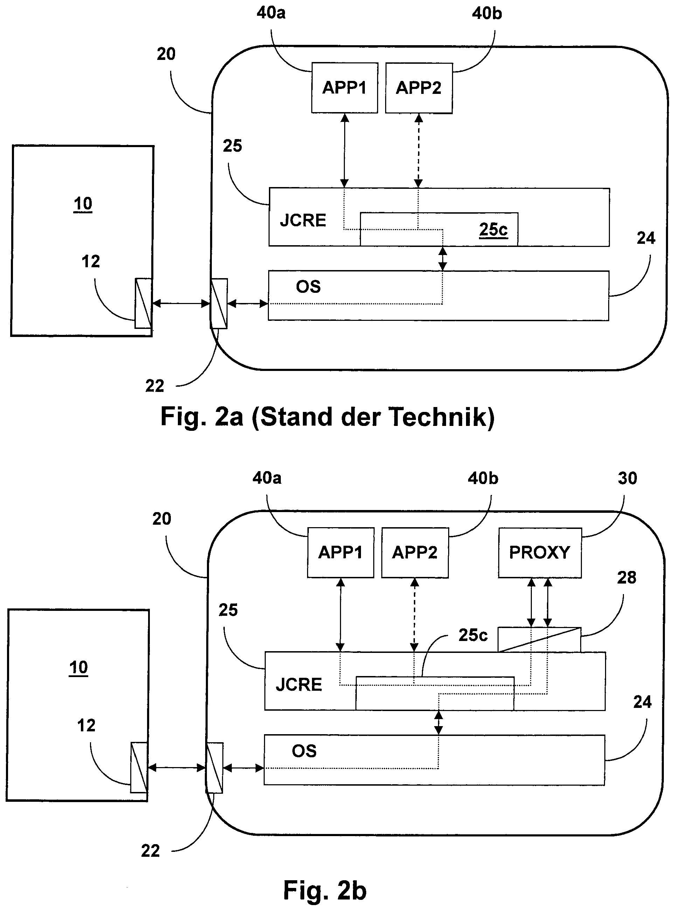

Die Java Card™-Technologie erlaubt die Implementierung von mehreren Applikationen auf einem portablen Datenträger, insbesondere auf einer Chipkarte. Aus Sicherheitsgründen schreibt die Java Card Spezifikation jedoch vor, dass eine externe Instanz, beispielsweise ein Chipkartenterminal, (pro logischem Kanal) immer nur mit einer Applikation auf der Chipkarte kommunizieren kann, was jedoch für einige Anwendungen unnötig einschränkend ist. Hierzu muss das Chipkartenterminal mittels einer AID ("application identifier") und einem entsprechenden Kommando die Zielapplikation identifizieren, mit der das Chipkartenterminal kommunizieren möchte. Dieses bekannte Verfahren ist schematisch in Figur 2a dargestellt, auf die in der nachstehenden detaillierten Beschreibung der Erfindung näher eingegangen wird.

Die Veröffentlichung XP002697875 "Smart Card Application Development Using Java" zeigt eine Implementierung einer Kommunikation mit applets auf einer Java Card mit externen "proxy objects" als Reprästentanten der applets.

Die Veröffentlichung XP002697876 "An Introduction to Java Card Technology - Part 3, The Smart Card Host Application" bietet eine Einführung in die Java Card Technologie mit Beispielen für die Kommunikation mit Chip Karten über (externe) applet proxies.

Vor diesem Hintergrund stellt sich der vorliegenden Erfindung die Aufgabe, ein flexibleres Verfahren zur Kommunikation mit einer Applikation auf einem portablen Datenträger sowie einen entsprechend ausgestalteten portablen Datenträger bereitzustellen.

Diese Aufgabe wird erfindungsgemäß durch das Verfahren zur Kommunikation mit einer Applikation auf einem portablen Datenträger nach Anspruch 1 gelöst. Ein entsprechend ausgestalteter portabler Datenträger ist Gegenstand des unabhängigen Vorrichtungsanspruchs. Vorteilhafte Weiterbildungen der Erfindung sind in den Unteransprüchen definiert.

Gemäß einem ersten Aspekt der Erfindung wird ein Verfahren zur Kommunikation mit einer Applikation auf einem portablen Datenträger bereitgestellt. Dabei umfasst das Verfahren die folgenden Schritte: das Weiterleiten eines Kommandos, das von einer externen Instanz an den portablen Datenträger übermittelt wird, von einer auf dem portablen Datenträger implementierten Laufzeitumgebung an eine auf dem portablen Datenträger implementierte Proxy-Applikation; das Weiterleiten des Kommandos von der Proxy-Applikation über die Laufzeitumgebung an die Applikation; und das Überwachen der Kommunikation zwischen der externen Instanz und der Applikation in Form des Kommandos und/oder das Eingreifen in diese Kommunikation durch die Proxy-Applikation.

Gemäß einem zweiten Aspekt der Erfindung wird ein portabler Datenträger bereitgestellt, auf dem wenigstens eine Applikation implementiert ist und der mit einer externen Instanz kommunizieren kann. Auf dem portablen Datenträger sind ferner eine Laufzeitumgebung und eine Proxy-Applikation implementiert. Dabei ist die Laufzeitumgebung dazu ausgestaltet, ein Kommando, das von der externen Instanz an den portablen Datenträger übermittelt wird, an die Proxy-Applikation weiterzuleiten. Die Proxy-Applikation ist dazu ausgestaltet, das Kommando über die Laufzeitumgebung an die Applikation weiterzuleiten und die Kommunikation zwischen der externen Instanz und der Applikation in Form des Kommandos zu überwachen und/oder in diese Kommunikation einzugreifen.

Vorzugsweise ist auf dem portablen Datenträger ferner eine Proxy-API bzw. Proxy-Schnittstelle implementiert, die eine geeignete Verbindung zwischen der Laufzeitumgebung und der Proxy-Applikation bereitstellt und dazu ausgestaltet ist, durch bei der Laufzeitumgebung eingehende Kommandos getriggert zu werden.

Gemäß einer bevorzugten Ausführungsform umfasst der Schritt des Überwachens der Kommunikation zwischen der externen Instanz und der Applikation und/oder des Eingreifens in diese Kommunikation durch die auf dem portablen Datenträger implementierte Proxy-Applikation das Aufzeichnen von Informationen über den Datenverkehr.

Alternativ oder zusätzlich umfasst der Schritt des Überwachens der Kommunikation zwischen der externen Instanz und der Applikation und/oder des Eingreifens in diese Kommunikation durch die auf dem portablen Datenträger implementierte Proxy-Applikation das Überwachen und Filtern von Daten, um Daten zu filtern, die die Sicherheit der Applikation oder des portablen Datenträgers gefährden könnten. Hiezu sind in der auf dem portablen Datenträger implementierten Proxy-Applikation vorzugsweise Filtereinstellungen hinterlegt, die auf APDU-Ebene oder Applikationsebene operieren können. Dabei können die in der Proxy-Applikation hinterlegten Filtereinstellungen vorzugsweise jeder Zeit geändert werden.

Gemäß einer bevorzugten Ausführungsform umfasst der Schritt des Überwachens der Kommunikation zwischen der externen Instanz und der Applikation und/oder des Eingreifens in diese Kommunikation durch die auf dem portablen Datenträger implementierte Proxy-Applikation alternativ oder zusätzlich das Bereitstellen von Erweiterungen der Applikation. Vorzugsweise ermöglicht die Erweiterung der Applikation eine vorher nicht gegebene Benutzerinteraktion, beispielsweise in Form einer graphischen Benutzeroberfläche.

Alternativ oder zusätzlich umfasst der Schritt des Überwachens der Kommunikation zwischen der externen Instanz und der Applikation und/oder des Eingreifens in diese Kommunikation durch die auf dem portablen Datenträger implementierte Proxy-Applikation das Umsetzen zwischen verschiedenen Transport- und/oder Applikationsprotokollen, für die die Applikation nicht eingerichtet ist.

Portable Datenträger im Sinne der vorliegenden Erfindung sind Datenträger wie Chipkarten, Kreditkarten, elektronische Ausweise, elektronische Reisepässe, SIM-Karten, Datenspeicherkarten, etc. Im Fall einer Chipkarte kann es sich um eine kontaktlose oder kontaktbehaftete Chipkarte handeln oder eine sowohl kontaktlos als auch kontaktbehaftet betreibbare Chipkarte (Dual-Interface-Karte) mit einem beliebigen Format, z.B. nach ISO 7810, z.B. ID-1 (Scheckkartenformat) oder ID-000 (SIM-Karten- oder Minikarten-Format) oder ID-00 oder nach einer anderen Norm.

Vorzugsweise handelt es sich bei dem portablen Datenträger um eine Chipkarte, insbesondere in Form einer Java Card, die für eine objektorientierte Programmiersprache eingerichtet ist. Entsprechend sind die wenigstens eine Applikation und die Proxy-Applikation als auf dem Datenträger ausführbare Java Card™ Applets ausgebildet. Bestehende Java Card™ Komponenten, also Laufzeitumgebung, Virtuelle Maschine und Klassenbibliothek, können unverändert beibehalten werden. Die beschriebene Erweiterung des bekannten Systems mittels der Proxy-Applikation und der Proxy-API erweitert die Funktionalität des Systems erheblich, während der Aufwand zur Anpassung minimal ist und bestehende Sicherheitsvorgaben weder verletzt noch eingeschränkt werden.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zur Kommunikation mit einer Applikation auf einem portablen Datenträger, als auch im Rahmen des zweiten Aspekts der Erfindung, d.h. im Rahmen des portablen Datenträgers, vorteilhaft implementieren.

Die Erfindung weist insbesondere die folgenden Vorteile auf. Eine Chipkarte, insbesondere eine Java Card, wird mittels der Proxy-Applikation mit einer flexiblen Kontrollinstanz versehen, die Zugriff auf eingehende Kommandos, insbesondere APDUs, hat, bevor diese an die eigentliche Zielapplikation weitergereicht werden. Auch in umgekehrter Kommunikationsrichtung hat die Proxy-Applikation Zugriff auf die Antwort einer Zielapplikation auf ein eingehendes Kommando und kann diese ändern. Somit erlaubt die Proxy-Applikation eine Einflussnahme auf die Kommunikation, vorzugsweise in Form von APDUs, zwischen einer auf dem portablen Datenträger verfügbaren Applikation und einer externen Instanz, beispielsweise in Form eines Terminals, ohne dass hierzu die auf dem portablen Datenträger verfügbare Applikation geändert werden müsste. Ferner bietet die Proxy-Applikation einem Benutzer beispielsweise mittels einer von der Proxy-Applikation bereitgestellten graphischen Benutzeroberfläche größere Einwirkungsmöglichkeiten, beispielsweise auf eine Applikation, die keine derartige graphische Benutzeroberfläche bereitstellt, und zwar ohne dass diese Applikation modifiziert werden muss. Schließlich steigert die Proxy-Applikation die Sicherheit des portablen Datenträgers, da sich mittels Filtereinstellungen beispielsweise unerlaubte APDUs und/oder Applikationen sperren lassen.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig.1: eine schematische Darstellung einer bevorzugten Ausführungsform eines erfindungsgemäßen portablen Datenträgers in Form einer Chipkarte in Kommunikation mit einer externen Instanz in Form eines Terminals,
- Fig. 2a: eine schematische Darstellung der Kommunikationswege zwischen einer Applikation auf einer Chipkarte und einem Terminal gemäß dem Stand der Technik und
- Fig. 2b: eine schematische Darstellung, die mögliche Kommunikationswege zwischen einer Applikation auf dem portablen Datenträger in Form einer Chipkarte von Figur 1 und einer externen Instanz in Form eines Terminals gemäß einer bevorzugten Ausführungsform der Erfindung veranschaulicht.

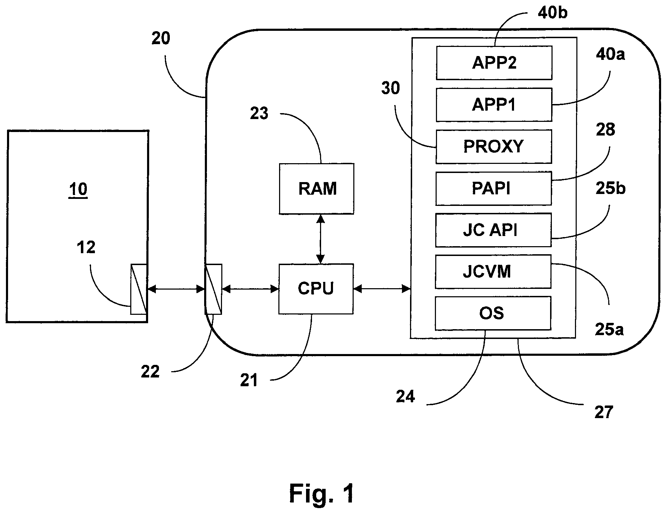

Figur 1 zeigt eine schematische Darstellung einer bevorzugten Ausführungsform eines erfindungsgemäßen portablen Datenträgers in Form einer Chipkarte 20 in Kommunikation mit einer externen Instanz in Form eines Terminals 10. Vorzugsweise ist die Chipkarte 20 als Java Card™ ausgestaltet. Selbstverständlich kann die vorliegende Erfindung jedoch auch in einem portablen Datenträger mit einer anderen Bauform und unter Verwendung eines anderen Kartenbetriebssystems verwirklicht werden.

Die in Figur 1 dargestellte Chipkarte 20 ist dazu ausgestaltet mit einer externen Instanz in Form eines Terminals bzw. Lesegeräts 10 Daten auszutauschen. Als ein Austausch von Daten wird hier eine Signalübertragung, eine wechselseitige Steuerung und in einfachen Fällen auch eine Verbindung zwischen dem Terminal 10 und der Chipkarte 20 verstanden. In der Informationstheorie wird ein Datenaustausch unter anderem durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht, d.h. die auszutauschenden Daten dekodieren kann.

Zur Datenübertragung bzw. Kommunikation zwischen der Chipkarte 20 und dem Terminal 10 weisen sowohl die Chipkarte 20 als auch das Terminal 10 geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und dem Terminal 10 kontaktlos, d.h. über die Luftschnittstelle, erfolgt. Alternativ kann die Chipkarte 20 über die Schnittstelle 22 galvanisch, d.h. kontaktbehaftet, mit der Schnittstelle 12 des Terminals 10 verbunden werden. In diesem Fall ist die Schnittstelle 22 in der Regel als ein auf einer Seite der Chipkarte 20 angeordnetes Kontaktfeld mit Kontaktflächen zum Datenaustausch mit dem Terminal 10 ausgebildet. Selbstverständlich werden von der vorliegenden Erfindung auch Chipkarten umfasst, die sowohl eine Schnittstelle zur kontaktbehafteten als auch eine Schnittstelle zur kontaktlosen Kommunikation mit einer externen Instanz, beispielsweise in Form eines Terminals aufweisen und die dem Fachmann als Dual-Interface-Chipkarten bekannt sind.

Neben der Schnittstelle 22 zur Kommunikation mit dem Terminal 10 umfasst die Chipkarte 20 eine zentrale Prozessor- bzw. Recheneinheit (CPU) 21, die in Kommunikationsverbindung mit der Schnittstelle 22 steht. Bekanntermaßen gehören zu den primären Aufgaben der CPU 21 das Ausführen von arithmetischen und logischen Funktionen und das Lesen und Schreiben von Datenelementen, wie dies durch von der CPU 21 ausgeführten Programmcode definiert wird. Die CPU 21 steht ferner mit einem flüchtigen Arbeitsspeicher (RAM) 23 und einem nichtflüchtigen wieder beschreibbaren Speicher 27 in Verbindung. Vorzugsweise handelt es sich bei dem nichtflüchtigen Speicher 27 um einen Flash-Speicher (Flash-EEPROM). Dabei kann es sich beispielsweise um einen Flash-Speicher mit einer NAND- oder einer NOR-Architektur handeln.

Bei der in Figur 1 dargestellten bevorzugten Ausführungsform ist in dem nichtflüchtigen Speicher 27 der Chipkarte 20 Programmcode gespeichert, der von der CPU 21 ausgeführt werden kann. Insbesondere kann in dem nichtflüchtigen Speicher 27 der Chipkarte 20 der Programmcode des Chipkarten-Betriebssystems 24 (OS), der Java Card Virtual Machine 25a (JCVM), der Java Card Application Programming Interface (JC API) 25b, einer Proxy-API 28 (PAPI), einer Proxy-Applikation 30 (PROXY), sowie einer ersten Applikation 40a (APP1) und einer zweiten Applikation 40b (APP2) hinterlegt sein. Dabei liegen die Proxy-Applikation 30 (PROXY), die erste Applikation 40a (APP1) und die zweite Applikation 40b (APP2) vorzugsweise in Form von Java Card™ Applets vor, wie dies nachstehend im Zusammenhang mit der Figur 2b im Detail beschrieben wird.

Da die kontaktbehaftete Kommunikation zwischen einem Terminal und einem portablen Datenträger, beispielsweise in Form einer Chipkarte, üblicherweise gemäß den in der internationalen Normen ISO/IEC 7816-3 ("Identification cards - Integrated circuit cards - Part 3: Cards with contacts - Electrical interface and transmission protocols") und ISO/IEC 7816-4 ("Identification cards - Integrated circuit cards - Part 4: Organization, security and commands for interchange") definierten Protokollen erfolgt, auf die hiermit ausdrücklich Bezug genommen wird, werden nachstehend bevorzugte Ausführungsformen der Erfindung unter Bezugnahme auf diese Normen beschrieben. Der Fachmann wird jedoch erkennen, dass der Grundgedanke der vorliegenden Erfindung nicht auf eine kontaktbehaftete Kommunikation zwischen einem Terminal bzw. Lesegerät und einem portablen Datenträger unter Einhaltung dieser Normen beschränkt ist, sondern auch im Rahmen anderer Kommunikationsnormen bzw. Kommunikationsprotokolle vorteilhaft eingesetzt werden kann, beispielsweise der Norm ISO/IEC 14444 für kontaktlos kommunizierende Chipkarten.

Vorzugsweise findet der gesamte Datenaustausch zwischen der Chipkarte 20 und dem Terminal 10 unter Verwendung von sogenannten APDUs (application protocol data units) gemäß der Norm ISO/IEC 7816-4 statt. Eine APDU stellt eine Dateneinheit der Anwendungsschicht dar, also eine Art Container, mit dem Kommandos und/oder Daten an die Chipkarte 20 übertragen werden. Man unterscheidet zwischen Kommando-APDUs, die von einem Terminal bzw. Lesegerät an eine Chipkarte gesendet werden, und Antwort-APDUs, die von der Chipkarte in Reaktion auf eine Kommando-APDU an das Terminal gesendet werden.

Wie dies dem Fachmann bekannt ist, wird in der Norm ISO/IEC 7816-4 die Struktur einer APDU dahingehend definiert, dass diese aus einem Header und einem Body besteht. Der APDU-Header umfasst insbesondere ein Class-Byte (CLA), das dazu benutzt wird, Applikationen und ihren spezifischen Befehlssatz zu kennzeichnen, sowie ein Instruction-Byte (INS), mit dem die eigentlichen Befehle bzw. Kommandos ausgewählt bzw. bestimmt werden. Der dem APDU-Header folgende APDU-Body umfasst insbesondere ein Datenfeld, das die Daten enthält, die zu dem durch CLA und INS bestimmten Kommando gehören. Für weitere Informationen zu APDUs wird insbesondere auf das Kapitel 8.3 des Buches "Handbuch der Chipkarten", Wolfgang Rankl und Wolfgang Effing, 5. Auflage, Carl Hanser Verlag München, 2008 verwiesen, auf das hiermit vollumfänglich Bezug genommen wird.

Herkömmlicherweise kommuniziert ein Terminal immer nur mit einem Applet auf einer Chipkarte. Wenn auf einer Chipkarte mehrere Applets implementiert sind und ein Terminal zu einem anderen Applet wechseln möchte, muss das Terminal zunächst dieses andere Applet auswählen, z.B. mittels des in einer APDU übertragenen Kommandos "SELECT". Dieser Zusammenhang ist schematisch in Figur 2a dargestellt, die den Datenfluss zwischen den unterschiedlichen Softwareebenen einer herkömmlichen Java Card illustriert. Der in einer Java Card Laufzeitumgebung (JCRE) 25 implementierte Mechanismus zur Weiterleitung von APDUs an das jeweils ausgewählte Applet kann als Verteilereinheit 25c betrachtet werden. Diese Verteilereinheit 25c verfügt in der Regel über eine AID Registry, d.h. ein Verzeichnis der auf der Chipkarte implementierten Applets inklusive deren AIDs ("application identifiers"), und einen globalen APDU Buffer, um eingehende und ausgehende APDUs zu hinterlegen. Die Verteilereinheit 25c ist dazu ausgestaltet, vom Terminal 10 ausgesendete und vom Betriebssystem 24 (OS) weitergeleitete APDUs nach Class-Byte und Instruction-Byte zu untersuchen und an das entsprechende Zielapplet, z.B. das Applet 40a oder 40b, weiterzureichen. Das AID eines Applets wird diesem vom der Verteilereinheit 25c zugewiesen und ist für jedes Applet eindeutig. Nachdem durch die Verteilereinheit 25c ein Kommunikationskanal zwischen dem Terminal 10 und einem Applet aufgebaut worden ist, erfolgt die weitere Kommunikation des Terminals 10 nur mit diesem Applet, und zwar so lange, bis das Terminal 10 ein neues Applet auswählt, beispielsweise mit dem "SELECT"-Kommando. Dem Fachmann ist der vorstehend beschriebene herkömmliche Kommunikationsmechanismus beispielsweise aus dem Buch "Java Card™ Technology for Smart Cards", Zhiqun Chen, Addison-Wesley, 2000, wohlbekannt, auf das hiermit ausdrücklich Bezug genommen wird.

Wie dies nachstehend unter Bezugnahme auf Figur 2b im Detail beschrieben wird, erweitert die vorliegende Erfindung die vorstehend beschriebenen herkömmlichen Möglichkeiten der Kommunikation zwischen dem Terminal 10 und einem Zielapplet, beispielsweise dem Applet 40a oder 40b, auf der Chipkarte 20. Diese Erweiterung ist vorzugsweise in Form des Proxy-Applets 30 und der Proxy-API bzw. Proxy-Schnittstelle 28 implementiert, die bereits im Zusammenhang mit Figur 1 beschrieben worden sind und auf die nachstehend näher eingegangen wird.

Die auf der Chipkarte 20 implementierte Proxy-API 28 stellt eine geeignete Verbindung zwischen der Java Card Laufzeitumgebung 25 (JCRE) und dem Proxy-Applet 30 bereit und ist dazu ausgestaltet, durch in der Verteilereinheit 25c eingehenden APDUs getriggert zu werden, z.B. in Form eines "APDU-Events". Das mit der Proxy-API 28 in Verbindung stehende Proxy-Applet 30 ist vorzugsweise dazu ausgestaltet, bei einem "APDU Event" den globalen APDU-Buffer der Verteilereinheit 25c mit der darin hinterlegten APDU zu überprüfen, den globalen APDU-Buffer zu verändern und/oder eine eigene APDU in den globalen APDU-Buffer zu kopieren.

Erfindungsgemäß ist das Proxy-Applet 30 ferner dazu ausgestaltet, über die Proxy-API 28 die Java Card Laufzeitumgebung 25 (JCRE) anzuweisen, dass eine APDU weiter verarbeitet werden soll, und zwar mit einem eventuell geänderten APDU-Buffer, oder dass die vom Proxy-Applet 30 bereitgestellte APDU direkt an das Terminal 10 zurückgeschickt werden soll. Dieser Mechanismus kann beispielsweise durch eine entsprechende Ausgestaltung der Proxy-API 28 verwirklicht werden. Beispielsweise kann die Proxy-API 28 dazu ausgestaltet sein, eine vom Proxy-Applet 30 kommende APDU daraufhin zu untersuchen, ob diese APDU für die Zielapplikation bestimmt ist oder direkt an das Terminal 10 zurückgehen soll.

Die Proxy-API 28 ermöglicht es insbesondere, dass das Proxy-Applet 30 als ein nachladbares Applet gemäß dem Java Card Standard realisiert werden kann. Bei der Proxy-API 28 handelt es sich somit um eine Programmierschnittstelle ("application programming interface"; API), die dazu ausgestaltet ist, um einerseits von der Java Card Laufzeitumgebung 25 (JCRE) bzw. deren Verteilereinheit 25c aus Events an das Proxy-Applet 30 zu schicken und andererseits Aktionen des Proxy-Applets 30 zurück an die Java Card Laufzeitumgebung 25 (JCRE) bzw. deren Verteilereinheit 25c zu kommunizieren (z.B. das Ablehnen oder Annehmen eines Kommandos). Der Fachmann wird erkennen, dass im einfachsten Fall die Proxy-API 28 im Wesentlichen lediglich in einem Aufruf des Proxy-Applets 30 mit einer Referenz auf den APDU-Buffer der Verteilereinheit 25c bestehen kann.

Die Ausgestaltung des Proxy-Applets 30 als Java-Applet weist unter anderem den Vorteil auf, dass etablierte Standards eine Remote-Administration des Proxy-Applets 30 erlauben, um beispielsweise Einstellungen des Proxy-Applets 30 zu ändern. Ferner besteht die Möglichkeit, wie bereits vorstehend beschrieben, das Proxy-Applet 30 erst dann auf der Chipkarte 20 zu installieren, wenn sich die Chipkarte 20 bereits im Feld befindet.

Das Proxy-Applet 30 ist vorzugsweise insbesondere dazu ausgestaltet, die folgenden Aktionen durchzuführen. Eingehende APDUs (in der Regel Kommando-APDUs) können auf der Grundlage von konfigurierbaren Filtereinstellungen (z.B. "SELECT APP1") mittels des Proxy-Applets 30 durchsucht werden. Wird dabei in einer APDU von dem Proxy-Applet 30 beispielsweise ein in den Filtereinstellungen definiertes AID eines Zielapplets gefunden, dann werden weitere Aktionen des Proxy-Applets 30 getriggert.

Vorzugsweise enthalten die im Proxy-Applet 30 hinterlegten Filtereinstellungen, die auf APDU-Ebene oder Applet-Ebene operieren können, eines oder mehrere der folgenden Elemente: eine Negativliste von APDUs und/oder Applets, mittels der die APDUs und/oder Applets der verfügbaren APDUs und/oder der verfügbaren Applets definiert werden, die blockiert werden sollen; eine Positivliste von APDUs und/oder Applets, mittels der die APDUs und/oder Applets der verfügbaren APDUs und/oder der verfügbaren Applets definiert werden, die zulässig sind. Mittels einer in dem Proxy-Applet 30 hinterlegten Negativliste können z.B. gezielt einzelne APDUs bzw. Kommandos gesperrt werden. Beispielsweise können damit alle Kommandos "SELECT AID" unterdrückt werden, so dass eine Selektion der auf der Chipkarte 20 verfügbaren Applets nur mittels des Proxy-Applets 30 durchgeführt werden kann.

Vorzugsweise ist das Proxy-Applet 30 derart ausgestaltet, dass die Filtereinstellungen des Proxy-Applets 30 zu jeder Zeit geändert werden können. Für den bevorzugten Fall, dass es sich bei der Chipkarte 20 beispielsweise um eine SIM-Karte für ein Mobiltelefon handelt, ist es denkbar, dass derartige Änderungen der Filtereinstellungen des Proxy-Applets 30 direkt von einem Benutzer mittels des Mobiltelefons vorgenommen werden können. Alternativ oder zusätzlich ist es denkbar, dass derartige Änderungen der Filtereinstellungen des Proxy-Applets 30 ohne direkte Benutzereinwirkung durch eine auf dem Mobiltelefon laufende Applikation durchgeführt werden. Um unberechtigte Änderungen der Filtereinstellungen des Proxy-Applets 30 verhindern zu können, sind vorzugsweise entsprechende Sicherheitsmechanismen auf der Chipkarte 20 implementiert. Beispielsweise können die Chipkarte 20 bzw. das Proxy-Applet 30 derart ausgestaltet sein, dass eine Änderung der Filtereinstellungen des Proxy-Applets 30 nur dann durch eine externe Instanz möglich ist, wenn sich diese externe Instanz gegenüber der Chipkarte 20 authentisiert hat, beispielsweise mittels eines gemeinsamen Geheimnisses, wie ein Passwort (PIN oder TAN), und/oder biometrischen Merkmalen.

Für den bevorzugten Fall, dass es sich bei der Chipkarte 20 beispielsweise um eine SIM-Karte für ein Mobiltelefon handelt, ist auf dem Mobiltelefon vorzugsweise eine Applikation implementiert, die es dem Benutzer des Mobiltelefons beispielsweise mittels einer von der Applikation bereitgestellten graphischen Benutzeroberflache ermöglicht, die Filtereinstellungen des Proxy-Applets 30 zu ändern. Zusätzlich oder alternativ können die Filtereinstellungen des Proxy-Applets 30 dadurch geändert werden, dass auf der Chipkarte 20 ein Webserver implementiert ist, auf den mittels eines Webbrowsers zugegriffen wird, um die Filtereinstellungen des Proxy-Applets 30 zu ändern. Gemäß einer weiteren Alternative kann zur Änderung der Filtereinstellungen des Proxy-Applets 30 auch eine SIM Toolkit-Anwendung eingesetzt werden. Gemäß einer noch weiteren bevorzugten Ausführungsform können die Filtereinstellungen des Proxy-Applets 30 OTA (Over The Air) von einem Server eines Hintergrundsystems direkt auf die Chipkarte 20 geladen werden.

Für den bevorzugten Fall, dass es sich bei der Chipkarte 20 beispielsweise um eine SIM-Karte für ein Mobiltelefon handelt, auf dem eine Applikation implementiert ist, die es dem Benutzer des Mobiltelefons beispielsweise mittels einer von der Applikation bereitgestellten graphischen Benutzeroberflache ermöglicht, die Filtereinstellungen des Proxy-Applets 30 zu ändern, kann vorzugsweise vorgesehen sein, dass bei der Änderung der Filtereinstellungen des Proxy-Applets 30 weitere Informationen berücksichtigt werden, die von dem Mobiltelefon bereitgestellt werden. Beispielsweise können Informationen über die geographische Position des Mobiltelefons, die mittels eines GPS-Moduls und/oder der Mobilfunkzelle ermittelt werden kann, in der sich das Mobiltelefon befindet, dazu verwendet werden, an bestimmten Orten oder in bestimmten Geschäften bestimmte auf der Chipkarte 20 verfügbare Applets zu priorisieren oder zu sperren. Mittels dieser Ausgestaltung des Proxy-Applets 30 kann sich beispielsweise ein einfacher Diebstahlschutz verwirklichen lassen, indem die Filtereinstellungen des Proxy-Applets 30 so gewählt werden, dass bestimmte durch Applets bereitgestellte Transaktionen außerhalb von definierten geographischen Gebieten durch das Proxy-Applet 30 gesperrt werden.

Mittels der vorstehend beschriebenen im Proxy-Applet 30 hinterlegten Filtereinstellungen kann das Proxy-Applet 30 als Firewall auf APDU-Ebene zwischen dem Terminal 10 und den auf der Chipkarte 20 verfügbaren Applets dienen. Ferner können beim Eingang bestimmter, in den Filtereinstellungen definierter Kommandos bzw. APDUs, vom Proxy-Applet 30 bestimmte Aktionen getriggert werden, wie beispielsweise die Benachrichtigung des Benutzers über die Selektion eines bestimmten der auf der Chipkarte 20 verfügbaren Applets.

Beim Betrieb der Chipkarte 20 als Sicherheitsmodul in einem Mobiltelefon ist es denkbar, dass das Proxy-Applet 30 mit einer graphischen Benutzeroberfläche ausgestattet ist, die z.B. auf dem Display des Mobiltelefons den Benutzer darüber informiert, dass das Proxy-Applet 30 aktiv wird. Diese graphische Benutzeroberfläche des Proxy-Applets 30 kann auch dazu verwendet werden, vom Benutzer eine Entscheidung treffen zu lassen, beispielsweise die Auswahl zwischen zwei unterschiedlichen Applets auf der Chipkarte 20, die entsprechend vom Proxy-Applet 30 umgesetzt wird.

Beispielsweise kann das Proxy-Applet 30 dazu ausgestaltet sein, sobald dieses durch eine eingehende APDU getriggert worden ist, eine Liste von geeigneten, auf der Chipkarte 20 verfügbaren Applets zu erstellen und diese dem Benutzer zur Auswahl vorzulegen. Vorzugsweise kann das Proxy-Applet 30 diese Liste von geeigneten, auf der Chipkarte 20 verfügbaren Applets als priorisierte Liste erstellen.

Aufgrund der vorstehend beschriebenen bevorzugten Ausgestaltungen ist das Proxy-Applet 30 dazu in der Lage, sicherzustellen, dass sich das Terminal 10 an die vom Proxy-Applet 30 erstellte Antwort-APDU auf ein "Select AID"-Kommando hält und nicht trotzdem ein anderes Applet mit einer anderen AID auswählt. Vorzugsweise ist das Proxy-Applet 30 dazu ausgestaltet, in einem solchen Fall, den Zugriff des Terminals 10 auf das andere Applet mit einer anderen AID zu blockieren und erst nach einer Bestätigung durch den Benutzer dieses Blockieren aufzuheben.

Wie dies in der Figur 2b schematisch dargestellt ist, können bei einer erfindungsgemäßen Ausgestaltung der Chipkarte 20 unterschiedliche Kommunikationspfade zwischen dem Terminal 10 und der Chipkarte 20 zum Einsatz kommen. Beispielsweise kann die von einem Zielapplet, z.B. dem Applet 40a oder 40b, erstellte Antwort-APDU zunächst über die Proxy-API 28 an das Proxy-Applet 30 geschickt werden, um dort von dem Proxy-Applet 30 überprüft zu werden, und anschließend über die Proxy-API 28 und die Java Card Laufzeitumgebung 25 (JCRE) bzw. deren Verteilereinheit 25c zurück zum Terminal 10 geschickt werden. Es ist jedoch ebenfalls vorstellbar, dass eine von einem Zielapplet erstellte Antwort-APDU direkt von dem Zielapplet (z.B. dem Applet 40a oder dem Applet 40b) über die Java Card Laufzeitumgebung 25 (JCRE) zurück an das Terminal 10 geschickt wird.

Nachstehend werden einige bevorzugte Anwendungsmöglichkeiten der vorstehend erläuterten erfindungsgemäßen Ausgestaltung beschrieben.

Die Chipkarte 20 kann beispielsweise dazu ausgestaltet sein, als Sicherheitsmodul in Form einer SIM-Karte in einem Mobiltelefon eingesetzt zu werden. Bei einem Mobiltelefon trifft häufig der Fall auf, dass eine auf dem Mobiltelefon implementierte Applikation sicher mit einem auf der SIM-Karte implementierten Applet kommunizieren können soll. Bei aktuellen Vorschlägen zur Absicherung von modernen Betriebssystemen von Mobiltelefonen, wie z.B. dem Betriebssystem Android, wird die Sicherheit durch den Software-Stack des Mobiltelefons geleistet, welcher das APDU-Interface zwischen einer auf dem Mobiltelefon implementierten Applikation und einem auf der SIM-Karte implementierten Applet ausbildet. Dabei besteht eine bekannte Lösung darin, dass auf der SIM-Karte eine kryptographische Struktur gemäß der Norm ISO 7816-15 bzw. PKCS #15 mit Zugangsregeln zur Verfügung gestellt wird, beispielsweise mit dem Hinweis, dass bestimmte APDUs an bestimmte, durch ihre AIDs definierte Applets auf der SIM-Karte nicht gesendet werden dürfen. Eine andere bekannte Lösung sieht vor, dass der Software-Stack des Mobiltelefons dazu ausgestaltet ist, bei einem Applet auf der SIM-Karte die aktuellen Sicherheitsregeln abzufragen. Ob diese Sicherheitsregeln jedoch eingehalten werden, hängt von der Ausgestaltung des Software-Stacks des Mobiltelefons ab, da die SIM-Karte lediglich die beispielsweise im Rahmen der Personalisierung in der SIM-Karte hinterlegten Informationen, beispielsweise die Sicherheitsregeln, liefert. Folglich kann diese Sicherheit durch einen Angriff auf das Betriebssystem und damit auf den Software-Stack des Mobiltelefons leicht ausgehebelt werden.

Dieses Problem kann durch eine erfindungsgemäße Ausgestaltung einer SIM-Karte mit dem Proxy-Applet 30 gelöst werden. Insbesondere können mittels des Proxy-Applets 30 die in der SIM-Karte hinterlegten Sicherheitsregeln zusätzlich auch auf Seiten der SIM-Karte durchgesetzt oder geblockt werden. Hierbei gilt lediglich die Einschränkung, dass das Durchsetzen oder Blocken der in der SIM-Karte hinterlegten Sicherheitsregeln auf Seiten der SIM-Karte mittels des Proxy-Applets 30 für alle Applikationen eines Mobiltelefons gilt, d.h. hier nicht zwischen unterschiedlichen Applikationen des Mobiltelefons unterschieden werden kann. Die SIM-Karte hat somit keine Informationen darüber, welche Applikation auf einem Mobiltelefon ein Kommando an die SIM-Karte geschickt hat bzw. ob die entsprechende Applikation vertrauenswürdig ist.

Neben der vorstehend beschriebenen Sicherheitsanwendung kann die vorliegende Erfindung insbesondere in den folgenden Szenarien vorteilhaft eingesetzt werden. Das Proxy-Applet 30 kann beispielsweise dazu dienen, den Funktionsumfang von Zielapplets zu erweitern, ohne dabei das Zielapplet selbst ändern zu müssen. Ferner kann das Proxy-Applet 30 beispielsweise dazu vorteilhaft eingesetzt werden, verschiedene Transport- und/oder Applikationsprotokolle umzusetzen, für die eine Applikation ursprünglich nicht eingerichtet war.

## Patentansprüche

1. Verfahren zur Kommunikation mit einer Applikation (40a, 40b) auf einem portablen Datenträger (20), wobei das Verfahren die folgenden Schritte umfasst:
das Weiterleiten eines Kommandos, das von einer externen Instanz (10) an den portablen Datenträger (20) übermittelt wird, von einer auf dem portablen Datenträger (20) implementierten Laufzeitumgebung nach dem Standard JCRE (25) an eine auf dem portablen Datenträger implementierte Proxy-Applikation (30);
das Weiterleiten des Kommandos von der Proxy-Applikation (30) über die Laufzeitumgebung an die Applikation (40a, 40b); und
das Überwachen der Kommunikation zwischen der externen Instanz (10) und der Applikation (40a, 40b) in Form des Kommandos und/oder das Eingreifen in diese Kommunikation durch die Proxy-Applikation (30).

2. Verfahren nach Anspruch 1, wobei das Weiterleiten der Kommandos über eine auf dem portablen Datenträger (20) implementierte Proxy-API (28) erfolgt, die eine geeignete Verbindung zwischen der Laufzeitumgebung (25) und der Proxy-Applikation (30) bereitstellt und dazu ausgestaltet ist, durch bei der Laufzeitumgebung (25) eingehende Kommandos getriggert zu werden.

3. Verfahren nach Anspruch 1, wobei der Schritt des Überwachens der Kommunikation zwischen der externen Instanz (10) und der Applikation (40a, 40b) und/oder des Eingreifens in diese Kommunikation durch die auf dem portablen Datenträger (20) implementierte Proxy-Applikation (30) das Aufzeichnen von Informationen über den Datenverkehr umfasst.

4. Verfahren nach Anspruch 1, wobei der Schritt des Überwachens der Kommunikation zwischen der externen Instanz (10) und der Applikation (40a, 40b) und/oder des Eingreifens in diese Kommunikation durch die auf dem portablen Datenträger (20) implementierte Proxy-Applikation (30) das Überwachen und Filtern von Daten umfasst, um Daten zu filtern, die die Sicherheit der Applikation (40a, 40b) oder des portablen Datenträgers (20) gefährden könnten.

5. Verfahren nach Anspruch 4, wobei in der auf dem portablen Datenträger (20) implementierten Proxy-Applikation (30) Filtereinstellungen hinterlegt sind, die auf APDU-Ebene oder Applikationsebene operieren können.

6. Verfahren nach Anspruch 5, wobei die in der Proxy-Applikation (30) hinterlegten Filtereinstellungen nachträglich geändert werden können.

7. Verfahren nach Anspruch 1, wobei der Schritt des Überwachens der Kommunikation zwischen der externen Instanz (10) und der Applikation (40a, 40b) und/oder des Eingreifens in diese Kommunikation durch die auf dem portablen Datenträger (20) implementierte Proxy-Applikation (30) das Bereitstellen von Erweiterungen der Applikation (40a, 40b) umfasst.

8. Verfahren nach Anspruch 7, wobei die Erweiterung der Applikation (40a, 40b) eine Benutzerinteraktion ermöglicht, beispielsweise in Form einer graphischen Benutzeroberfläche.

9. Verfahren nach Anspruch 1, wobei der Schritt des Überwachens der Kommunikation zwischen der externen Instanz (10) und der Applikation (40a, 40b) und/oder des Eingreifens in diese Kommunikation durch die auf dem portablen Datenträger (20) implementierte Proxy-Applikation (30) das Umsetzen zwischen verschiedenen Transport- und/oder Applikationsprotokollen umfasst, für die die Applikation (40a, 40b) nicht eingerichtet ist.

10. Portabler Datenträger (20), auf dem wenigstens eine Applikation (40a, 40b) implementiert ist und der mit einer externen Instanz (10) kommunizieren kann, wobei auf dem portablen Datenträger (20) ferner eine Laufzeitumgebung nach dem Standard JCRE (25) und eine Proxy-Applikation (30) implementiert sind, wobei die Laufzeitumgebung (25) dazu ausgestaltet ist, ein Kommando, das von der externen Instanz (10) an den portablen Datenträger (20) übermittelt wird, an die Proxy-Applikation (30) weiterzuleiten, und wobei die Proxy-Applikation (30) dazu ausgestaltet ist, das Kommando über die Laufzeitumgebung (25) an die Applikation (40a, 40b) weiterzuleiten und die Kommunikation zwischen der externen Instanz (10) und der Applikation (40a, 40b) in Form des Kommandos zu überwachen und/oder in diese Kommunikation einzugreifen.

## Claims

1. A method for communicating with an application (40a, 40b) on a portable data carrier (20), wherein the method comprises the following steps of:
forwarding a command transmitted by an external entity (10) to the portable data carrier (20), from a runtime environment according to the standard JCRE (25) implemented on the portable data carrier (20) to a proxy application (30) implemented on the portable data carrier;
forwarding the command from the proxy application (30) via the runtime environment to the application (40a, 40b); and
monitoring the communication between the external entity (10) and the application (40a, 40b) in the form of the command and/or intervening in said communication by the proxy application (30).

2. The method according to claim 1, wherein the forwarding of the commands takes place via a proxy API (28) implemented on the portable data carrier (20), said proxy API making available a suitable connection between the runtime environment (25) and the proxy application (30) and being arranged to be triggered by commands received by the runtime environment (25).

3. The method according to claim 1, wherein the step of monitoring the communication between the external entity (10) and the application (40a, 40b) and/or of intervening in said communication by the proxy application (30) implemented on the portable data carrier (20) comprises the recording of information about the data traffic.

4. The method according to claim 1, wherein the step of monitoring the communication between the external entity (10) and the application (40a, 40b) and/or of intervening in said communication by the proxy application (30) implemented on the portable data carrier (20) comprises the monitoring and filtering of data, in order to filter data which could endanger the security of the application (40a, 40b) or of the portable data carrier (20).

5. The method according to claim 4, wherein in the proxy application (30) implemented on the portable data carrier (20) there are deposited filter settings which can operate on the APDU level or application level.

6. The method according to claim 5, wherein the filter settings deposited in the proxy application (30) can be changed subsequently.

7. The method according to claim 1, wherein the step of monitoring the communication between the external entity (10) and the application (40a, 40b) and/or of intervening in said communication by the proxy application (30) implemented on the portable data carrier (20) comprises making available extensions of the application (40a, 40b).

8. The method according to claim 7, wherein the extension of the application (40a, 40b) makes a user interaction possible, for example in the form of a graphic user interface.

9. The method according to claim 1, wherein the step of monitoring the communication between the external entity (10) and the application (40a, 40b) and/or of intervening in said communication by the proxy application (30) implemented on the portable data carrier (20) comprises the switching between different transport protocols and/or application protocols for which the application (40a, 40b) is not adapted.

10. A portable data carrier (20) having at least one application (40a, 40b) implemented thereon and being able to communicate with an external entity (10), wherein on the portable data carrier (20) there are further implemented a runtime environment according to the standard JCRE (25) and a proxy application (30), wherein the runtime environment (25) is arranged for forwarding a command transmitted by the external entity (10) to the portable data carrier (20) to the proxy application (30), and wherein the proxy application (30) is arranged for forwarding the command via the runtime environment (25) to the application (40a, 40b) and for monitoring the communication between the external entity (10) and the application (40a, 40b) in the form of the command and/or intervening in said communication.

## Revendications

1. Procédé de communication avec une application (40a, 40b) sur un support de données (20) portable, cependant que le procédé comprend les étapes suivantes :
le transfert d'une instruction transmise d'une instance externe (10) au support de données (20) portable d'un environnement d'exécution mis en oeuvre sur le support de données (20) portable conformément au standard JCRE (25) à une application proxi (30) mise en oeuvre sur le support de données portable ;
le transfert de l'instruction de l'application proxi (30), par l'intermédiaire à l'environnement d'exécution, à l'application (40a, 40b) ; et
la surveillance de la communication entre l'instance externe (10) et l'application (40a, 40b) sous forme de l'instruction et/ou l'intervention dans cette communication par l'application proxi (30).

2. Procédé selon la revendication 1, cependant que le transfert de l'instruction a lieu par l'intermédiaire d'une API proxy (28) mise en oeuvre sur le support de données (20) portable, laquelle met à disposition une liaison appropriée entre l'environnement d'exécution (25) et l'application proxi (30) et est conçue pour être déclenchée par des instructions arrivant à l'environnement d'exécution (25).

3. Procédé selon la revendication 1, cependant que l'étape de la surveillance de la communication entre l'instance externe (10) et l'application (40a, 40b) et/ou de l'intervention dans cette communication par l'application proxi (30) mise en oeuvre sur le support de données (20) comprend l'enregistrement d'informations sur le trafic de données.

4. Procédé selon la revendication 1, cependant que l'étape de la surveillance de la communication entre l'instance externe (10) et l'application (40a, 40b) et/ou de l'intervention dans cette communication par l'application proxi (30) mise en oeuvre sur le support de données (20) portable comprend la surveillance et le filtrage de données afin de filtrer des données qui pourraient mettre en danger la sécurité de l'application (40a, 40b) ou du support de données (20) portable.

5. Procédé selon la revendication 4, cependant que, dans l'application proxi (30) mise en oeuvre sur le support de données (20), des paramètres de filtrage sont stockés, lesquels peuvent opérer au niveau APDU ou au niveau application.

6. Procédé selon la revendication 5, cependant que les paramètres de filtrage stockés dans l'application proxi (30) peuvent être modifiés subséquemment.

7. Procédé selon la revendication 1, cependant que l'étape de la surveillance de la communication entre l'instance externe (10) et l'application (40a, 40b) et/ou de l'intervention dans cette communication par l'application proxi (30) mise en oeuvre sur le support de données (20) portable comprend la mise à disposition d'extensions de l'application (40a, 40b).

8. Procédé selon la revendication 7, cependant que l'extension de l'application (40a, 40b) permet une interaction d'utilisateur, par exemple sous forme d'une interface graphique utilisateur.

9. Procédé selon la revendication 1, cependant que l'étape de la surveillance de la communication entre l'instance externe (10) et l'application (40a, 40b) et/ou de l'intervention dans cette communication par l'application proxi (30) mise en oeuvre sur le support de données (20) portable comprend la conversion entre différents protocoles de transport et/ou d'application pour lesquels l'application (40a, 40b) n'est pas configurée.

10. Support de données (20) portable sur lequel au moins une application (40a, 40b) est mise en oeuvre et qui peut communiquer avec une instance externe (10), cependant que, sur le support de données (20) portable, en outre un environnement d'exécution conformément au standard JCRE (25) et une application proxi (30) sont mis en oeuvre, cependant que l'environnement d'exécution (25) est conçu pour transférer à l'application proxi (30) une instruction transmise par l'instance externe (10) au support de données (20) portable, et cependant que l'application proxi (30) est conçue pour transférer l'instruction par l'intermédiaire de l'environnement d'exécution (25) à l'application (40a, 40b) et pour surveiller la communication entre l'instance externe (10) et l'application (40a, 40b) sous forme de l'instruction et/ou pour intervenir dans cette communication.
